# EUROPEAN PATENT SPECIFICATION

(11) **EP 1 173 021 B1**
(45) Date of publication and mention of the grant of the patent: **01.06.2005**
(21) Application number: 01116111.4
(22) Date of filing: 03.07.2001
(51) Int. Cl.: H04N 7/173, G08G 1/09, G01S 5/14, G01C 21/00

(54) **Interior image information providing system using portable information terminal and portable information terminal having versatile functions**
System zum Bereitstellen von Innenraumbildinformationen mittels eines tragbaren Informationsendgerätes und tragbares vielseitiges Informationsendgerät
Système pour fournir des informations d'image d'un intérieur en utilisant un terminal d'information portable et un terminal des informations portable à fonctions polyvalentes

(30) Priority: 13.07.2000 JP 2000212886; 19.09.2000 JP 2000282929
(43) Date of publication of application: 16.01.2002
(73) Proprietor: Pioneer Corporation, Meguro-ku, Tokyo (JP); Pioneer Design Corporation, Meguro-ku, Tokyo (JP)
(72) Inventor: Hirayama, Naofumi, Pioneer Design Corporation, Tokyo (JP); Tomono, Mizuki, Pioneer Design Corporation, Tokyo (JP); Nakatsuka, Yoshinori, Pioneer Design Corporation, Tokyo (JP); Arakawa, Mikiko, Iruma-shi, Saitama (JP); Kobayashi, Katsumi, Kawaguchi-shi, Saitama (JP)
(74) Representative: Manitz, Finsterwald & Partner GbR

(56) References cited:
- EP-A- 0 836 168
- EP-A- 0 875 878
- EP-A- 0 935 227
- US-A- 5 396 429
- PATENT ABSTRACTS OF JAPAN vol. 1999, no. 08, 30 June 1999 (1999-06-30) & JP 11 065434 A (HITACHI LTD;ZANAVY INFORMATICS:KK), 5 March 1999 (1999-03-05)

## Description

### BACKGROUND OF THE INVENTION

### 1. Field of the Invention

The present invention relates to a multi-functional portable information terminal equipped with a display and a system for providing this portable information terminal with image information obtained by imaging an inside condition of a shop, etc.

### 2. Description of Related Art

An information terminal according to the preamble of claim 1 is known from EP-A-0 836 168. This document relates to a vehicle navigation system. A map information providing system for vehicles is also disclosed in EP-A-0 875 878.

In general, as is often the case with customers who visit stores, etc. for shopping, if they cannot look over the inside of the shops such as in department stores or large stores, they want to know conditions of the floor where commodities that they wish to buy are and how floors are crowded.

In such a case, it can be considered to dispose monitor televisions at necessary locations of the stores and display images showing inside conditions of the stores at all times so as to be utilized by the customers, however, a large number of monitoring televisions must be installed and the cost thereof increases. In addition, the users, when wishing to see the inside conditions of the store, must look for the locations where the monitoring televisions have been installed and they must move to the locations, therefore it is hard to consider that such monitoring televisions are always effectively used so as to meet user needs.

Also, in a case where Internet users find desirable . facilities and stores such as restaurants and the like in banner advertising that is delivered or through search and they wish to visit such facilities and stores, with conventional systems, they are able to find out the outlines of the facilities and stores in the contents of the advertising and explanatory notes, etc. However, they are been able to recognize the inside conditions of the facilities and stores such as, for example, live information from the inside of the stores including conditions of commodities on display and how the store are crowded at the moment. Thus, a case is likely to occur where the users cannot easily determine whether to visit the stores or not and when they visit the stores and the like, they get disappointed.

Therefore, in general, there is a demand that they want to know, beforehand, the inside conditions of the facilities such as stores where they wish to visit.

### OBJECTS AND SUMMARY OF THE INVENTION

The present invention has been made to meet the various conventional demands as described above.

That is, an object of the present invention is to make it possible to easily obtain image information from the inside of facilities.

The object is met by a portable information terminal in accordance with claim 1 and by an interior image information providing system in accordance with claim 4.

In order to achieve the above object, a portable information terminal according to a first aspect of the present invention comprises: a display part for displaying an image; an image signal receiving part for receiving an image signal to be sent via a mobile communication network; an image signal reproducing part which reproduces the image signal received by means of the image signal receiving part and makes the display part display the reproduced image; and a position detecting signal outputting part which outputs, via a mobile communication network, a position detecting signal representing an own position of said portable information terminal, wherein said position detecting signal is supplied to an interior image information providing site in which said position detecting signal is used to identify an image-pickup device located in an area including said own position of said portable information terminal, and said image signal receiving part receives images from the image-pickup device identified by the interior image information providing site.

A portable information terminal according to the first aspect of the invention sends, via a mobile communication network, position data indicating a place where the portable information terminal is located by means of the position detecting signal outputting part.

The position data is, for example, received by an interior image information providing site which provides images of the inside of facilities such as stores via a computer network, and when the image signal receiving part of the portable information terminal receives, from the interior image information providing site, an image signal obtained by imaging the inside of a facility where the portable information terminal is located, the image signal reproducing part reproduces the image signal thus received by the image signal receiving part and makes the display part display the reproduced image.

As described above, according to the first aspect of the present invention, it becomes possible that a user, who enters a facility where the image-pickup part has been installed, easily obtain image information of the inside of the facility by means of the portable information terminal which he/she carries with him/her. Thus, it becomes possible to eliminate the inconvenience that, when he/she wishes to see the inside condition of the facility, he/she must look for the location where an monitor television is installed and must move to the location of installation and it becomes unnecessary to install a number of monitor televisions to meet user needs in the facility, thus the cost thereof can be reduced.

In order to achieve the above object, in addition to the above mentioned construction, a portable information terminal according to a second aspect of the present invention is characterized in that the position detecting signal outputting part is a global positioning system, whereby positional information of the portable information terminal can be securely provided for, for example, an interior image information providing site which provides an image of the inside a facility via a computer network.

In order to achieve the above object, in addition to the construction according to the first aspect, a portable information terminal according to a third aspect of the present invention is characterized in that the portable information terminal is a portable telephone, whereby interior image information can be easily received via a mobile communication network.

In order to achieve the above object, an interior image information providing system by means of a portable information terminal according to a fourth aspect of the present invention comprises: a portable information terminal; an interior image information providing site which is connected to the portable information terminal via a mobile communication network and also connected to a computer network; and a facility site which is provided with an image-pickup part installed in a facility and sends an image signal obtained by the image-pickup part to a computer network, wherein
the portable information terminal is provided with: a display part for displaying an image; an image signal receiving part for receiving an image signal to be sent via a mobile communication network connected to a computer network; an image signal reproducing part which reproduces the image signal received by means of the image signal receiving part and makes the display part display the reproduced image; and a position detecting signal outputting part which outputs, via a mobile communication network, a position detecting signal for making a judgement on an image-pickup part which sends an image signal to the image signal receiving part to a computer network and
the interior image information providing site is provided with: a judging part for making a judgement on the facility site to receive an image signal based on a position detecting signal to be inputted from the position detecting signal outputting part of the portable information terminal and a sending means for sending the image signal to be inputted, via a computer network, from an image-pickup part of the facility site, which has been judged to receive the image signal, to the portable information terminal via a mobile communication network.

In an interior image information providing system by means of a portable information terminal according to the fourth aspect of the present invention, when the portable information terminal detects a place where the portable information terminal is located by means of the position detecting signal outputting part mounted thereon and sends the position detecting signal from a mobile communication network via a computer network to the interior image information providing site, the judging part of the interior image information providing site then makes judgement on the facility site to receive an image signal, that is, the facility site installed in the facility where the portable information terminal which is sending the position detecting signal, based on the position detecting signal to be inputted from the position detecting signal outputting part of the portable information terminal, whereby the interior image information providing site performs connection to the facility site, which has been judged to receive an image signal via a computer network.

Then, when an image signal showing the inside condition of the facility, that has been imaged by the image pick-up part installed in the facility, is sent from the facility site connected via a computer network, the sending part of the interior image information providing site sends said image signal to the portable information terminal, which is sending the position detecting signal, via a computer network and a mobile communication network.

When the image signal receiving part of the portable information terminal which is sending the position detecting signal receives the image signal to be sent from the interior image information providing site, the image signal reproducing signal part reproduces the thus received image signal and makes the display part display the reproduced image.

As described above, according to the fourth aspect of the present invention, it becomes possible that the user who enters the facility in which the facility site having the image-pickup part has been installed easily obtains the image information of the inside of the facility and it becomes possible to eliminate the inconvenience that, when he/she wishes to see the inside condition of the facility, he/she must look for the location where the monitor television is installed and must move to the location of installation, it becomes unnecessary to install a number of monitor televisions in the facility to meet user needs, and thus the cost thereof can be reduced.

In order to achieve the above object, in addition to the construction according to the fourth aspect, an interior image information providing system by means of a portable information terminal according to a fifth aspect of the present invention is characterized in that the position detecting signal outputting part is a global positioning system, whereby positional information of the portable information terminal can be securely provided for an interior image information providing site which provides an image inside of a facility via a computer network.

In order to achieve the above object, in addition to the construction according to the fourth aspect, an interior image information providing system by means of a portable information terminal according to a sixth aspect of the present invention is characterized in that the portable information terminal is a portable telephone, whereby interior image information can be easily received via a mobile communication network.

In order to achieve the above object, in addition to the construction according to the fourth aspect, an interior image information providing system by means of a portable information terminal according to a seventh aspect of the present invention is characterized in that the interior image information providing site comprises a program database in which programs for driving and controlling the image-pickup part of each facility site are stored.

According to an interior image information providing system by means of a portable information terminal according to the seventh aspect of the present invention, when the interior image information providing site makes judgement, by means of the judging part thereof, on the facility site where an image signal is received, that is, the facility site installed in a facility where the portable information terminal is located, a program for driving and controlling the image-pickup part which has been stored according to the interior site for receiving an image signal is read out from the program database and the image-pickup part provided in the facility site is driven and controlled by the program so that imaging is performed inside the facility.

Thus, according to the seventh aspect, it becomes possible for each facility site to drive and control the image-pickup part in accordance with the facility condition, thus a proper image which meets a user demand can be displayed on the portable information terminal.

In order to achieve the above object, in addition to the construction according to the seventh aspect, an interior image information providing system by means of a portable information terminal according to an eighth aspect of the present invention is characterized in that distinguishing data for distinguishing a portable information terminal is added to the program of each facility site which has been stored in the program database and the portable information terminal distinguishing data is sent to the facility site that has been judged by means of the judging part, whereby the distinguishing data for distinguishing a portable information terminal which is outputting a position signal is sent to the facility site where the portable information terminal is located, thus making it possible that the facility site distinguishes the portable information terminal which is located inside the facility. Therefore, it becomes possible to send an image signal obtained by imaging the inside of the facility directly to the portable information terminal from the facility site without passing it through the interior image information providing site.

In order to achieve the above object, in addition to the construction according to the fourth aspect, an interior image information providing system by means of a portable information terminal according to a ninth aspect of the present invention is characterized in that the interior image information providing site is provided with a registered facility database in which information on facilities where the facility sites have been installed is recorded and which provides the judging part with data for making a judgement on the facility site.

According to an interior image information providing system by means of a portable information terminal according to the ninth aspect of the present invention, various types of information on facilities in which facility sites have been installed and which have been registered in the interior image information providing system is recorded in the registered facility database and the judging part searches said registered facility database based on a position detecting signal to be sent from the portable information terminal, whereby judgement including as to whether a facility has been registered or not is performed.

In order to achieve the above object, in addition to the construction according to the ninth aspect, an interior image information providing system by means of a portable information terminal according to a tenth aspect of the present invention is characterized in that position data indicating the positions of registered facilities is recorded in the registered facility database, whereby the judging part of the interior image information providing system makes comparison between the position of the portable information terminal which is indicated by a position detecting signal to be sent from the portable information terminal and the position of a registered facility indicated by the position data which has been recorded in the registered facility database, and thus making it possible to easily make judgement on a facility site where an image signal is received.

In order to achieve the above object, in addition to the construction according to the fourth aspect, an interior image information providing system by means of a portable information terminal according to an eleventh aspect of the present invention is characterized in that the judging part of the interior image information providing site makes the above judgement by confirming whether a facility exists or not based on position information indicating the position of the facility which has been accumulated in a map database site connected to a computer network, whereby it becomes unnecessary to accumulate the position information on the facilities, which have been registered in the interior image information providing system, in the interior image information providing site. Therefore, even in a case where a facility registered in the interior image information providing system has moved, it becomes unnecessary to change settings for the information on the registered facilities in the interior image information providing system and the interior image information providing system can be smoothly managed.

In order to achieve the above object, in addition to the construction according to the fourth aspect, an interior image information providing system by means of a portable information terminal according to a twelfth aspect of the present invention is characterized in that when the position detecting signal to be inputted from the position detecting signal outputting part of the portable information terminal indicates a position inside of a facility, the judging part judges the facility site installed in the facility to be a facility site where an image signal is to be received.

According to an interior image information providing system by means of a portable information terminal according to the twelfth aspect of the present invention, in a case where a facility site has been installed in a facility such as a store where a user visits, the user carrying a portable information terminal with him/her can obtain image information showing an inside condition of the facility and check the information on the spot, therefore, the inconvenience that the user must look for a location where a monitoring television is installed and move to the location of installation is eliminated and it becomes unnecessary to install a number of monitor televisions in the facility to meet user needs, and thus the cost thereof can be reduced.

In order to achieve the above object, an interior image information providing system by means of a portable information terminal according to a thirteenth aspect of the present invention comprises: a portable information terminal; an interior image information providing site which is connected to the portable information terminal via a mobile communication network and also connected to a computer network; and a facility site which is provided with an image-pickup part installed in a facility and sends an image signal obtained by said image-pickup means to a computer network, wherein
the portable information terminal is provided with: a display part for displaying an image; an image signal receiving part for receiving an image signal to be sent via a mobile communication network connected to a computer network; an image signal reproducing part which reproduces the image signal received by means of the image signal receiving part and makes the display part display the reproduced image; and a position detecting signal outputting part which detects a position of the portable information terminal and outputs, via a mobile communication network, a position detecting signal thereof to the computer network and
the interior image information providing site is provided with: a facility detecting part which detects, based on the position detecting signal to be inputted from the position detecting signal outputting part of the portable information terminal, facilities located in the vicinity of the position indicated by said position detecting signal and sends a display signal which displays the detected facilities to the portable information terminal, and a sending part for sending image signals to be inputted, via computer networks, from the image-pickup means of the facility sites installed in the facilities displayed by means of the display signal in the portable information terminal to a portable information terminal via a mobile communication network.

In an interior image information providing system by means of a portable information terminal according to the thirteenth aspect of the present invention, when the portable information terminal detects a place where the portable information terminal is located by means of the position detecting signal outputting part mounted thereon and sends the position detecting signal from a mobile communication network via a computer network to the interior image information providing site, the facility detecting part of the interior image information providing site detects, based on a position detecting signal to be inputted from the position detecting signal outputting part of the portable information terminal, facilities in the vicinity of the location indicated by the position detecting signal, that is, the position where a user carrying the portable information terminal with him/her stands, whereby a display signal which displays the detected facilities is sent to the portable information terminal via a computer network.

Then, for example, if an arbitrary facility which the user desires is specified among the plurality of facilities displayed on the portable information terminal by the display signal, the interior image information providing site is connected via a computer network to a facility site installed in the specified facility.

Then, when an image signal obtained showing a condition inside of the facility, that has been imaged by an image pick-up part installed in the facility, is sent from the facility site connected via a computer network to the interior image information providing site, a sending part of the interior image information providing site sends the image signal to the portable information terminal which is sending the position detecting signal, via a computer network and a mobile communication network.

When the image signal receiving part of the portable information terminal which has sent the position detecting signal receives the image signal to be sent from the interior image information providing site, the image signal reproducing part reproduces the thus received image signal and makes the display part display the reproduced image.

As described above, according to the thirteenth aspect of the present invention, it becomes possible that a user receives live image information inside of the facilities located in the vicinity of the place where the user stands at that moment for checking before visiting the facility and the user easily select a facility which suits his/her own purpose.

In addition, if a facility such as a store arranges commodities and exhibits that the facility wants to appeal to the visitors at positions easily viewed from the image-pickup part, images thereof can become very effective advertising media.

Also, according to such interior image information providing system, it becomes possible to grasp the actual situation through provision of live information and such facility information can be obtained anywhere anytime by means of the portable information terminal such as a portable telephone, therefore, advertising media which are more excellent than the advertising by means the press media and commercials in the broadcasting media can be provided.

In order to achieve the above object, in addition to the construction according to the thirteenth aspect, an interior image information providing system by means of a portable information terminal according to a fourteenth aspect of the present invention is characterized in that the facility detecting part is a map database site which is provided with a map database and a facility database and provides map information and facility information included in said map information.

According an interior image information providing system by means of a portable information terminal according to the fourteenth aspect of the present invention, when a position detecting signal showing the position of the portable information terminal is inputted into the interior image information providing site from the position detecting signal outputting part of the portable information terminal, search a map database and a facility database is performed based on the inputted position detecting signal in the map database site to be connected to the interior image information providing site via a computer network, thus facilities located in the vicinity of the position indicated by the position detecting signal are detected.

In order to achieve the above object, in addition to the construction according to the thirteenth aspect, an interior image information providing system by means of a portable information terminal according to a fifteenth aspect of the present invention is characterized in that, based on a position detecting signal to inputted from the portable information terminal, the facility detecting part detects facilities which are located in the vicinity of the position indicated by the position detecting signal and also included in a category specified in the portable information terminal.

According to an interior image information providing system by means of a portable information terminal according to the fifteenth aspect of the present invention, a user specifies a category of facilities such as, for example, restaurants, movie theaters, convenience stores, and discount shops beforehand, whereby when facilities are detected by means of the facility detecting part, of facilities located in the vicinity of the position where the portable information terminal is located, facilities included in the category desired by the user are selected and detected, thus making it possible that the user select a facility, on which the user actually wishes to obtain image information, more easily.

In order to achieve the above object, in addition to the construction according to the thirteenth aspect, an interior image information providing system by means of a portable information terminal according to a sixteenth aspect of the present invention is characterized in that the portable information terminal comprises a facility specifying means for specifying a facility which receives an image signal of a plurality of facilities that have been detected by the facility detecting part of the interior image information providing site.

According to an interior image information providing system by means of a portable information terminal according to the sixteenth aspect of the present invention, when a plurality of facilities located in the vicinity of the position where the portable information terminal is located are detected by the facility detecting part of the interior image information providing site, by specifying an arbitrary facility of the detected plurality of facilities by means of the facility specifying part, it becomes possible that the user easily obtain image information of the desirable facility.

In order to achieve the above object, an interior image information providing system by means of a portable information terminal according to a seventeenth aspect of the present invention comprises: a portable information terminal; an interior image information providing site which is connected to the portable information terminal via a mobile communication network and also connected to a computer network; and a facility site which is provided with an image-pickup part installed in a facility and sends an image signal obtained by the image-pickup part to a computer network, wherein
the portable information terminal is provided with: a display part for displaying an image; an image signal receiving part for receiving an image signal to be sent via a mobile communication network connected to a computer network; an image signal reproducing part which reproduces the image signal received by means of the image signal receiving part and makes the display part display the reproduced image; and a facility specifying part for outputting a facility specifying signal to a computer network via a mobile communication network and
the interior image information providing site is provided with: a sending part for sending an image signal, which is to be inputted via a computer network from an image-pickup means of the facility site installed in a facility specified by the facility specifying signal to be inputted from the facility specifying part of the portable information terminal, to the portable information terminal via a mobile communication network.

In an interior image information providing system by means of a portable information terminal according to the seventeenth aspect of the present invention, when the portable information terminal allows the facility specifying means thereof to send a facility specifying signal on which the user desires to obtain image information to the interior image information providing site from a mobile communication network via a computer network, the interior image information providing site is connected, via a computer network, to a facility site installed in a facility indicated by the inputted facility specifying signal.

Then, when an image signal showing an inside condition of the facility which has been imaged by the image-pickup means installed in the facility is sent to the interior image information providing site from the facility site connected thereto via the computer network, the sending part of the interior image information providing site sends the image signal to the portable information terminal, from which a facility specifying signal has been sent, via a computer network and a mobile communication network.

When the image signal receiving part of the portable information terminal which is sending the position detecting signal receives the image signal to be sent from the interior image information providing site, the image signal reproducing signal means reproduces the thus received image signal and makes the display part display the reproduced image.

As described above, according to the seventeenth aspect, the user can obtain live image information inside of a desirable facility for checking before visiting the facility by means of the portable information terminal which the user is carrying with him/her, so that the user can easily select a facility which will serve his/her purpose.

In addition, if a facility such as a store arranges commodities and exhibits that the facility wants to appeal to the visitors at positions easily viewed from the image-pickup part, images thereof can become very effective advertising media.

Then, according to such interior image information providing system, it becomes possible to grasp the actual situation through provision of live information and such facility information can be obtained anywhere anytime by means of the portable information terminal such as a portable telephone, therefore, advertising media which are more excellent than the advertising by means the press media and commercials in the broadcasting media can be provided.

In order to achieve the above object, in addition to the seventeenth aspect, an interior image information providing system by means of a portable information terminal according to an eighteenth aspect of the present invention is characterized in that the facility specifying part of the portable information terminal specifies an facility based on the URL of the facility site, whereby by specifying the URL of a facility site by means of the portable information terminal, the user can obtain live image information inside of the facility beforehand without visiting the facility.

In order to achieve the above object, in addition to the seventeenth aspect, an interior image information providing system by means of a portable information terminal according to a nineteenth aspect of the present invention is characterized in that the interior image information providing site is provided with a facility searching part for searching for a facility based on the address, wherein the facility searching part searches for a facility where the facility site has been installed based on a facility specifying signal indicating the address of a facility to be sent from the facility specifying part of the portable information terminal, whereby by inputting the address of a facility site in the portable information terminal, the user can obtain live image information inside of the facility beforehand without visiting the facility.

In order to achieve the above object, in addition to the seventeenth aspect, an interior image information providing system by means of a portable information terminal according to a twentieth aspect of the present invention is characterized in that the facility detecting part is a map database site which is provided with a map database, a facility database, and an address database and provides map information and facility information included in said map information.

According to an interior image information providing system by means of a portable information terminal according to the twentieth aspect, when a facility specifying signal showing the address of the facility is inputted into the interior image information providing site from the facility specifying part of the portable information terminal, search of a map database, a facility database, and an address database is performed based on the inputted position detecting signal in the map database site to be connected to the interior image information providing site via a computer network, thus detection to obtain image information is performed.

### BRIEF DESCRIPTION OF THE DRAWINGS

Fig. 1 is a front view illustrating a portable telephone according to an embodiment of the present invention, with the open/close cover being closed.
Fig. 2 is a front view illustrating the portable telephone of the present invention with the open/close cover being opened.
Fig. 3 is a block diagram illustrating the control part of the portable telephone of the present invention.
Fig. 4 is an explanatory view illustrating an arrangement of application windows according to the embodiment of the present invention.
Figs. 5A to 5F are explanatory views illustrating examples of application windows according to the embodiment of the present invention.
Fig. 6 is an explanatory conceptual view illustrating the display form of application windows according to the embodiment of the present invention.
Fig. 7 is an explanatory conceptual view illustrating the form of application windows according to the embodiment of the present invention.
Fig. 8 is an explanatory view illustrating the concept of the arrangement of the input edit window of each application according to the embodiment of the present invention.
Fig. 9 is a system configuration view showing an embodiment of the interior image information providing system according to the present invention.
Fig. 10 is a flowchart showing the main routine of the window display control to be performed by the control part according to the embodiment of the present invention.
Fig. 11 is a view showing a window example displayed in the display panel of the portable telephone according to the embodiment of the present invention.
Fig. 12 is a system configuration view showing another embodiment of the interior image information providing system according to the present invention.

### DETAILED DESCRIPTION OF THE PREFERRED EMBODIMENTS

Now, an embodiment of the present invention will be explained below in detail with reference to the accompanying drawings.

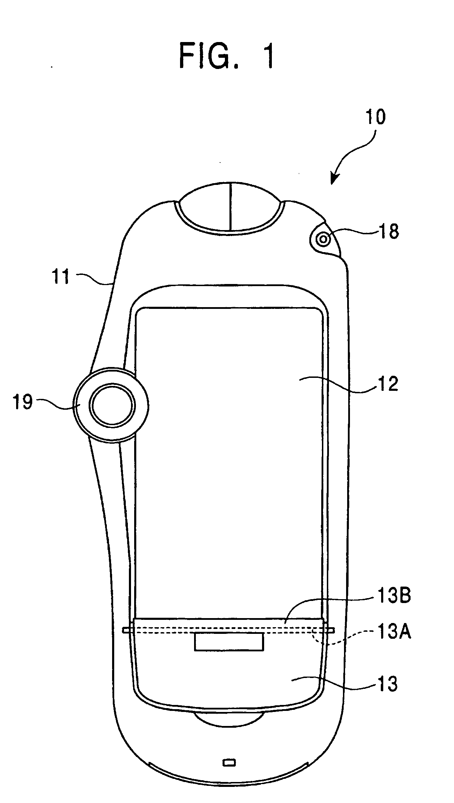

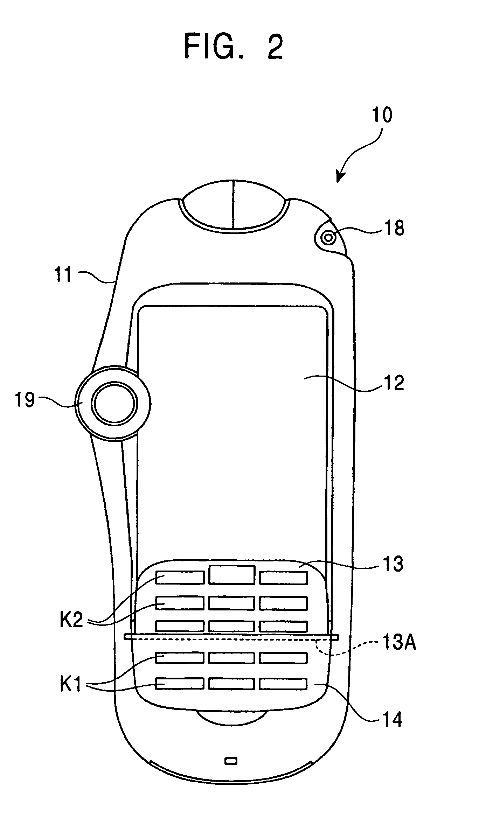

Fig. 1 is a front view illustrating a portable telephone, as an example of the portable information terminal according to an embodiment of the present invention, and Fig. 2 is a front view illustrating a condition of the portable telephone when operated.

Referring to Figs. 1 and 2, a portable telephone 10 has a display panel 12 arranged at the central part of the surface of a main body casing 11, and an open/close cover 13 disposed at the lower part of the display panel 12.

The open/close cover 13 is rotatably attached vertically at the upper end part thereof to the main body casing 11 by means of an axle 13A, which is parallel to the lower end rim of the display panel 12.

In addition, there is provided a control panel 14 on the part to be covered with the open/close cover 13 of the main body casing 11. As shown in Fig. 2, on the surface of the control panel 14, there are arranged first operation keys K1 such as telephone Number input keys and function keys. Moreover, on the reverse side of the open/close cover 13 (which is the front side when the cover is opened), there are arranged second operation keys K2.

There is provided a CCD camera 18 on the upper right part of the main body casing 11 as shown in the figures. There is also provided a spectrum dial 19 on the left such as for switching the display windows of the display panel 12.

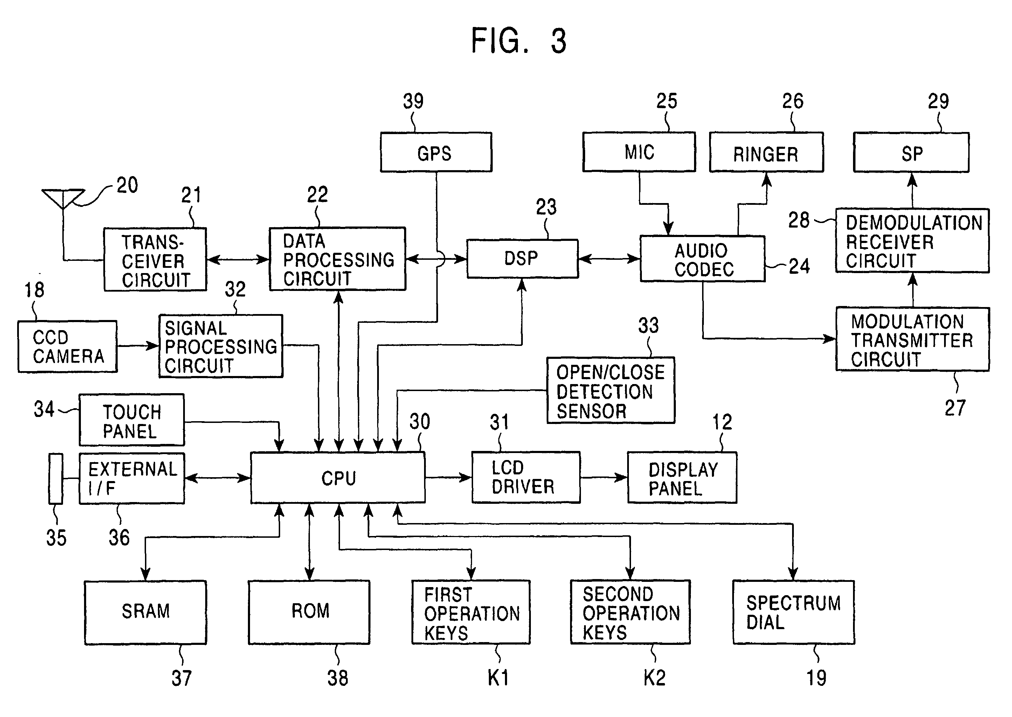

Fig. 3 is a block diagram illustrating an example of the configuration of the control part of the portable telephone 10.

Referring to Fig. 3, an antenna 20 attached to the main body casing 11 of the portable telephone 10 is successively connected with a transceiver circuit 21, a data processing circuit 22, and a high-speed processing microprocessor or a digital signal processor (DSP) 23. Here, the data processing circuit 22 performs clock control on the image and audio signals received by the transceiver circuit 21 and serves as an interface to a CPU, described later.

The DSP 23 is connected with an audio codec 24. The audio codec 24 is connected with a microphone 25 and a ringer 26. In addition, the audio codec 24 is connected with a loudspeaker 29 via a modulation transmitter circuit 27 and a demodulation receiver circuit 28.

The data processing circuit 22 and the DSP 23 are connected to the CPU 30.

In addition, the CPU 30 is connected with the display panel 12 via a LCD driver 31, the CCD camera 18 via a signal processing circuit 32, and an open/close detection sensor 33 which is attached to the open/close part of the open/close cover 13 to detect the opened or closed status of the open/close cover 13. The CPU 30 is also connected with a touch panel 34 attached to the display panel 12. Via an external I/F 36, connected to the CPU 30 is a connector 35 which is connected to a personal computer or the like and through which various data is communicated to and from the personal computer or the like. The CPU 30 is also connected with a SRAM 37 in which various personal data are stored such as abbreviated telephone numbers to be inputted by the user. The CPU 30 is further connected with a ROM 38 in which various control programs for the portable telephone are stored. The CPU 30 is also connected with the spectrum dial 19, and the first operation keys K1 and the second operation keys K2, which contain various operation keys such as function keys and a ten-key pad for use in inputting telephone numbers.

Furthermore, the CPU 30 is connected with a global positioning system (GPS) circuit 39, the position of the portable telephone 10 is measured by communication with a satellite, and the position data is inputted into the CPU 30.

The control part of the portable telephone 10 allows the transceiver circuit 21 to receive a radio wave through the antenna 20. Then, the data processing circuit 22 separates the radio waves into an image signal and an audio signal. While being subjected to clock control, the image signal is outputted to the CPU 30 and the audio signal is outputted to the DSP 23 each in accordance with a command from the CPU 30.

The audio signal inputted to the DSP 23 is subjected to audio processing in the DSP 23 and then inputted to the audio codec 24 for D/A conversion. Then, the resulting signal is outputted to the loudspeaker 29 via the modulation transmitter circuit 27 and the demodulation receiver circuit 28 as well as to the ringer 26.

On the other hand, the audio signal inputted from the microphone 25 is subjected to A/D conversion in the audio codec 24. Then, the resulting signal is transmitted from the antenna 20 via the DSP 23, the data processing circuit 22, and the transceiver circuit 21.

The CPU 30 allows the various control programs of the portable telephone stored in the ROM 38 to control the operation of the data processing circuit 22, the DSP 23, the LCD driver 31 and the like.

That is, in accordance with an operation signal from the first operation keys K1 or the second operation keys K2, the CPU 30 will read a control program corresponding to the operation signal from the ROM 38. Then, in accordance with the control program that has been read, the CPU 30 will output image data of an operation window to the LCD driver 31 to allow the display panel 12 to display the operation window. In addition, the CPU 30 controls the operation of the data processing circuit 22 and the DSP 23, reads data from or writes data to the SRAM 37, and communicates data with the personal computer or the like to which the connector 35 is connected.

Furthermore, when a display window has been switched over to a new window through the spectrum dial 19, the CPU 30 reads corresponding image data read from the ROM 38 and then outputs the resulting data to the LCD driver 31, thereby allowing the new window to appear on the display panel 12.

Furthermore, upon picking-up of an image by means of the CCD camera 18, the CPU 30 will receive the image signal which is sent from the CCD camera 18 and processed in the signal processing circuit 32. Then, the CPU 30 outputs the image signal to the LCD driver 31, thereby allowing the resulting image to appear on the display panel 12.

Moreover, the CPU 30 sends the position data inputted from the GPS circuit 39 from the antenna 20 via the data processing circuit 22 and the sending/receiving circuit 21 to the mobile communication network and further sends the position data to an interior image information providing site (which will be described later) via Internet.

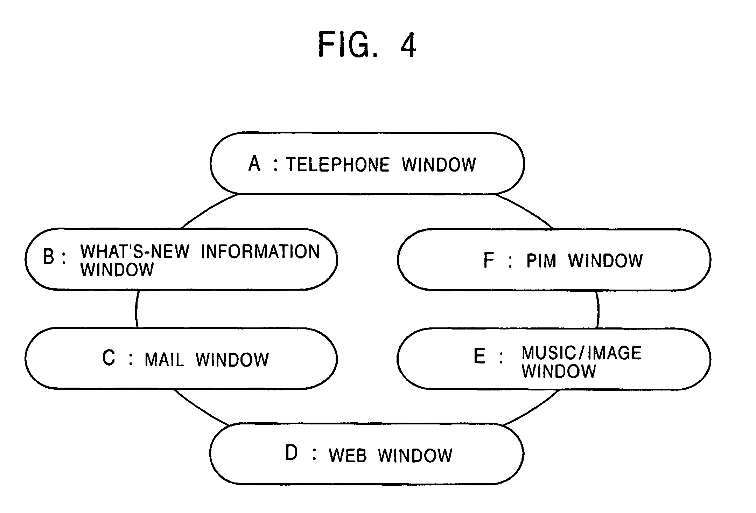

In this example, the portable telephone 10 is equipped with six applications: telephone, what's-new, mail, Web, music/image, and PIM (Personal Information Manager) applications. As shown in Fig. 4, successively displayed on the display panel 12 through the operation of the spectrum dial 19 are a telephone window A, a what's-new window B, a mail window C, a Web window D, a music/image window E, and a PIM window F, corresponding to each of the applications.

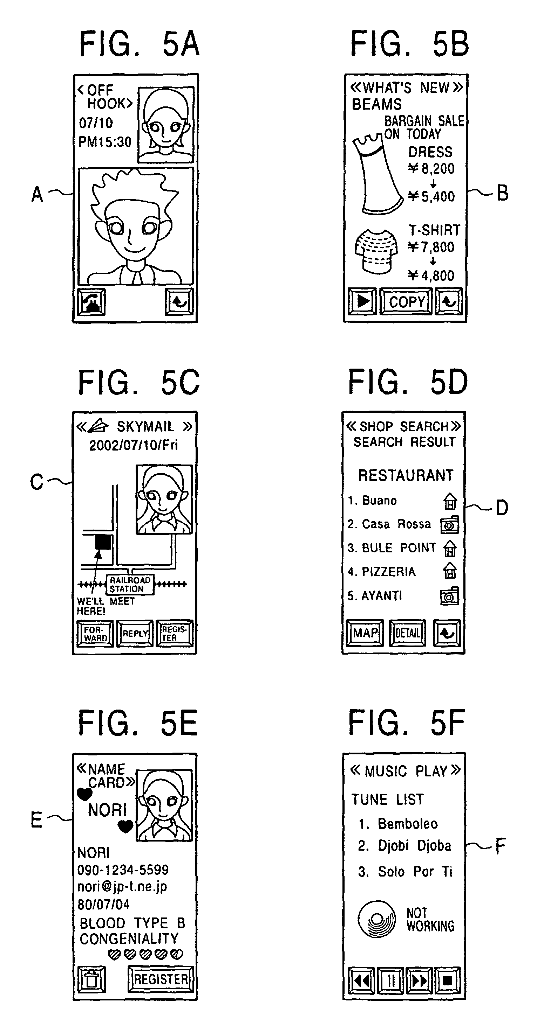

Fig. 5A shows an example of the telephone window A to be displayed on the display panel 12, Fig. 5B shows an example of the what's-new window B, Fig. 5C shows an example of the mail window C, and Fig. 5D shows an example of the Web window D. Fig. 5E shows an example of the music/image window E and Fig. 5F shows an example of the PIM window F.

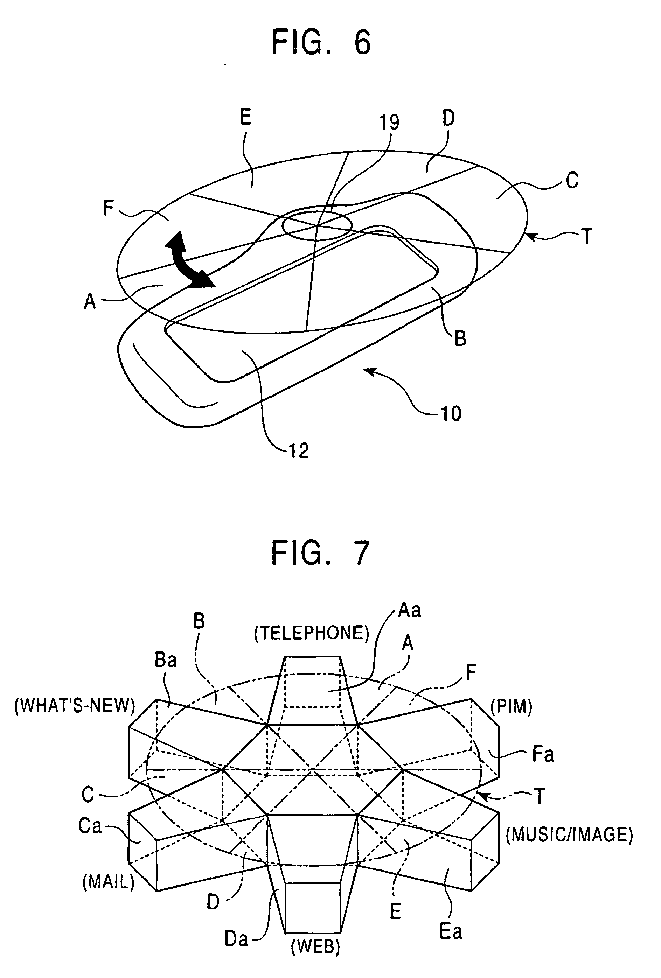

Fig. 6 is a conceptual view illustrating the window image of each of the application windows A to F to be displayed on the display panel 12.

That is, the display windows A to F are conceptually each assigned to each of the six regions which are provided by radially dividing a disc T with its center at the spectrum dial 19, the display windows A to F being arranged as shown in Fig. 4. A rotational operation of the spectrum dial 19 allows the disc T to rotate about the spectrum dial 19, causing the display windows A to F on the disc T to appear successively on the display panel 12.

Incidentally, each of the regions divided radially on the disc T is provided with its own color, whereby each of the windows A to F is displayed on the display panel 12 in a different background color from any one of the other regions.

In addition, each of the display windows A to F is provided spatially with contents Aa to Fa corresponding to each application as conceptually expressed in Fig. 7.

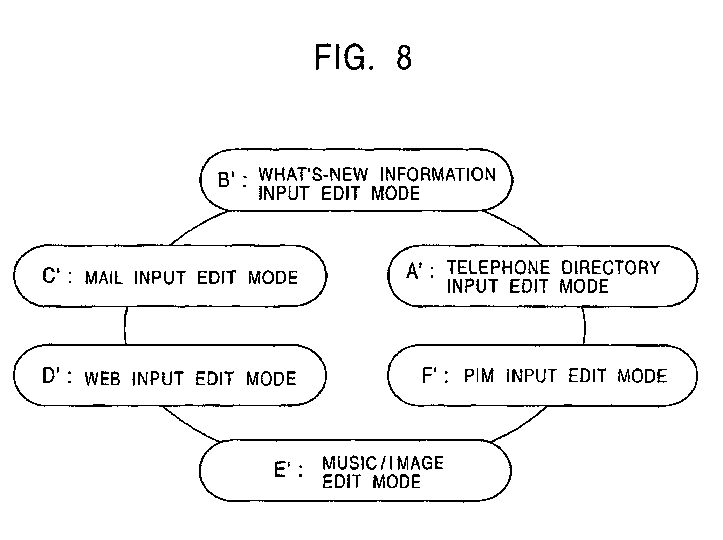

Furthermore, each of the applications is provided with each input edit window A' to F', which is to be displayed through a mode change in place of the windows A to F as shown in Fig. 8.

A program stored in the ROM 38 of the control part (refer to Fig. 3) organizes the display form of the windows A to F and the input edit window A' to F' on the display panel 12, and the contents Aa to Fa each corresponding to each of the applications.

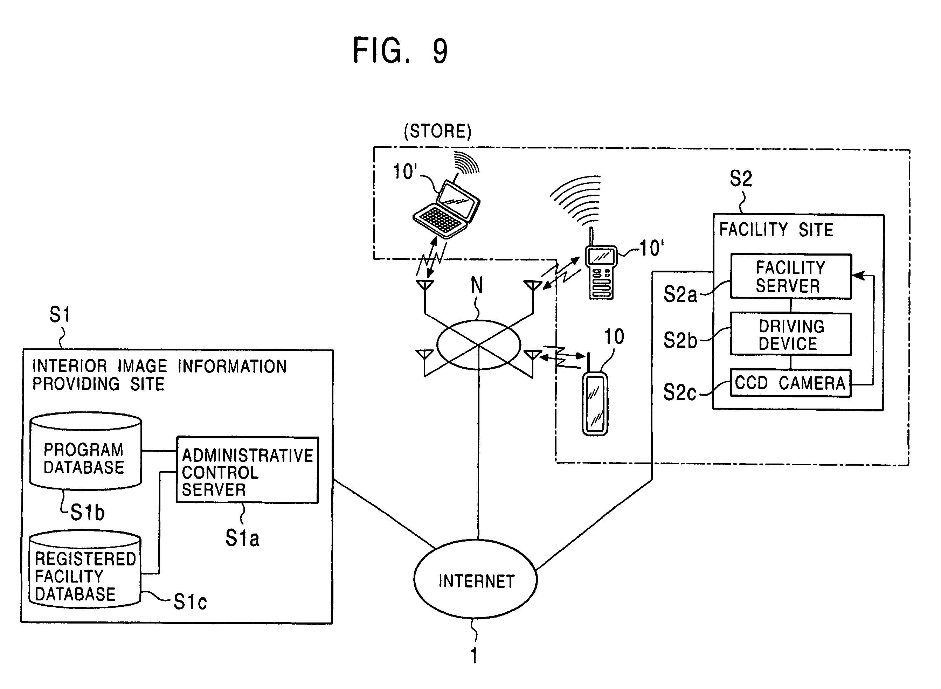

Fig. 9 is a system configuration view showing an embodiment of the interior image information providing system according to the present invention.

Hereinafter, the description will be given with reference to stores such as department stores as facilities where image information is provided. However, the present interior image information providing system is applied not only to such stores, but also to various facilities such as museums, art museums, exhibition sites, stadiums and the like.

Referring to Fig. 9, the interior image information providing site S1 is a site which sends the portable telephone 10 and another portable information terminal such as personal digital assistants 10' image information provided by facility sites (which will be described later) based on position data to be sent from said portable telephone 10 and the personal digital assistants 10' via Internet I and comprises an administrative control server S1a, a program database S1b, and a registered facility database S1c.

In the program database S1b of the interior image information providing site S1, identification numbers (IDs) of the respective facility sites S2 and processing programs for driving and controlling CCD cameras and processing image information (which will be described later) in the facility sites S2 are stored according to the respective IDs.

Also, in the registered user database S1c, information related to the facilities which have been registered in this interior image information providing system such as IDs for identifying the facility sites S2 of registered facility sites and the store name, category, position data and the like according to respective IDs are registered.

Then, the administrative control server S1a is set so as to receive position information to be sent from the portable telephone 10 and personal digital assistants 10' (which will be described in detail later) and further receive image information to be sent from the facility sites S2 of the stores where the portable telephone 10 and the personal digital assistants 10' are located, and then send such image information to the portable telephone 10 and the personal digital assistants 10' via Internet I and the mobile communication network N.

In the respective stores registered in the interior image information providing system, the facility site S2 connected to the Internet I is installed and the facility site S2 comprises a facility server S2a which supervises control for sending information to and receiving information from the interior image information providing site S1, a driving device S2b for a CCD camera, and a CCD camera S2c installed at a necessary position in the store.

Now, the operation procedures and actions in the portable telephone 10 when image information on the inside of a store (facility) is received by means of the portable telephone 10 will be explained.

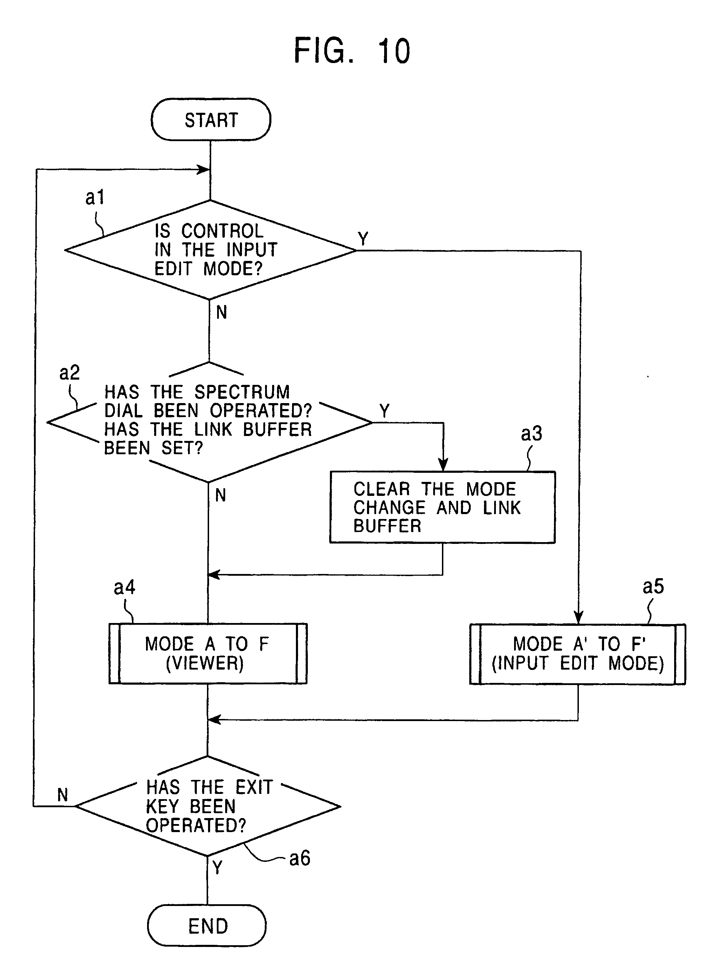

Fig. 10 is a flowchart showing the main routine for the mode change (the selection of an application) of the portable telephone 10.

Referring to Fig. 10, the CPU 30 (refer to Fig. 3) determines if control is in the input edit mode (step a1). If control is not in the input edit mode, it is then determined if the spectrum dial 19 has been operated and a link buffer has been set to the application that is to be selected through the operation of the spectrum dial 19 (step a2).

In the step a2, if the spectrum dial 19 has been operated, the mode is switched over to the application that has been selected by the operation of the spectrum dial 19. In addition, if the link buffer has been set to the selected application, the buffer link is cleared (step a3).

Then, control proceeds to the viewer mode subroutine of each application (step a4).

In the step a2, if the spectrum dial 19 has not been operated, control proceeds to the subroutine of step a4 in the viewer mode of the application that has been selected in the previous operation.

On the other hand, in step a1, if control is in the input edit mode, control proceeds to the subroutine in the input edit mode of the application that has been selected in the previous operation (step a5).

Then, it is determined if the exit key has been inputted (step a6). If the exit key has not been inputted, control repeats the procedure from the aforementioned step a1. If the exit key has been inputted, control exits the viewer mode or the input edit mode of the selected application.

In a case where an image of the inside of a store where a user visited is received through the mode changing operation of the portable telephone 10, control turns on a power source of the GPS circuit 39 (refer to Fig. 3) and starts to detect the position information of the place where the portable telephone 10 or the portable information terminal is located, and control then selects the viewer mode of the web application and makes the display panel 12 of the portable telephone or the personal digital assistant 10' display a web window D of the viewer mode.

Then, when control displays a web input edit mode D' in the web window D and inputs the URL (uniform resource locator) of the interior image information providing site S1 therein, the portable telephone 10 or the personal digital assistant 10' accesses the interior image information providing site S1 from a mobile communication network N via Internet for connecting.

Thus, position data indicating the position of the portable telephone 10 or the personal digital assistant 10' which has been detected by the GPS circuit 39, that is, the position of the store where the user carrying the portable telephone 10 or the personal digital assistant 10' with him/her visited is sent to the administrative control server S1a of the interior image information providing site S1 via Internet.

The administrative control server S1a which has been received the position data of the portable telephone 10 or the personal digital assistant 10' searches the registered database S1c based on the thus received position data and then reads out the ID of the facility site S2 of a registered store having corresponding position data.

The administrative control server S1a further searches the program database S1b based on the thus read-out ID and reads out a processing program having a corresponding ID.

Then, the administrative control server S1a accesses the facility site S2 having the ID via Internet I based on the thus read-out processing program for connecting.

The facility site S2 which has been accessed by the administrative control server S1a is a facility site which has been installed in the store where the user carrying the portable telephone 10 or the personal digital assistant 10' with him/her visited.

Then the facility server S2a of the facility site S2 controls the driving device S2b in accordance with the read-out processing program which has been in the administrative control server S1a, thereby driving the CCD camera S2c for imaging the inside state of the store.

The image information from the inside of the store which has been imaged by the CCD camera S2c is sent, via Internet, to the administrative control server S1a of the interior image information providing site S1.

In this process, if the CCD cameras S2c are respectively provided at a plurality of positions inside the store, the CCD cameras S2c at respective positions of the inside of the store are switched over in order at intervals of a predetermined period of time and picked-up images are taken in one by one.

Also, the CCD cameras S2c are respectively rotated so as to image a predetermined range of the inside of the store in order.

The image information on the inside of the store which has been thus sent from the facility site S2 to the interior image information providing site S1 is sent to the portable telephone 10 or the personal digital assistant 10' via Internet I and a mobile communication network N by the administrative control server S1a.

The portable telephone 10 or the personal digital assistant 10' receives, by means of the antenna 20 and the transceiver circuit 21, the image information which has been thus sent from interior image information providing site S1. Then, the portable telephone 10 or the personal digital assistant 10' demodulates said image information in the data processing circuit 22 and inputs the image signal into the CPU 30 while performing clock control.

Herein, if an audio signal is included in the digital image signal, the audio signal is separated in this data processing circuit 22, inputted into the DSP 23, and outputted from the speaker 29 of the portable telephone 10 as mentioned above.

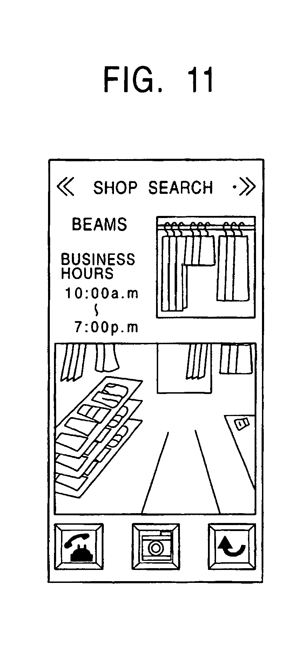

The demodulated image signal, that has been inputted into the CPU 30, is subjected to necessary processing such as compression and decompression and then outputted to the LCD driver 31. Then, based on the image signal to be inputted, the LCD driver 31 makes the display panel 12 display an image obtained through imaging of the inside of the store, for example, as shown in Fig. 11, in real time.

Thus, by means of the portable telephone 10 or the personal digital assistant 10', the user can see the image obtained by imaging the state of the store where the user is in real time.

Furthermore, in terms of the above operation of the portable telephone 10, if the store where the user has visited is not included in stores which have registered in the interior image information providing system, the administrative control server S1a of the interior image information providing site S1 finds that no store that corresponds to the position data sent from the portable telephone 10 has been registered as a result of search of the registered facility database S1c and sends a signal for displaying a message to this effect to the portable telephone 10 or the personal digital assistant 10' for displaying on the display panel 12 of the portable telephone 10 and the like.

Herein, another construction may be applied to the interior image information providing system, wherein data for distinguishing the portable telephone 10 and the personal digital assistant 10', which will access interior image information providing site S1, is added to the processing programs of the respective IDs, that have been accumulated in the program database S1b of the interior image information providing site S1, and said distinguishing data of the portable telephone 10 or the like is sent to the facility site S2 of the store where the portable telephone 10 or the like is located, so that the image information of the images picked-up by the CCD camera S2c can be sent from the facility server S2a of the facility site S2 via a mobile communication network N directly to the portable telephone 10 or the like.

Also, another construction may be applied, wherein the CCD camera S2c is kept driven at all times in the facility site S2 and when the portable telephone 10 or the personal digital assistant 10' which is sending the position data which has been detected in the GPS circuit 39 (refer to Fig. 3) to the interior image information providing site S1 enters the inside of an arbitrary store which has been registered in the interior image information providing system, the interior image information providing site S1 instructs the facility site S2 of the store where the portable telephone 10 or the like has entered to send the image information obtained by the CCD camera S2c to the interior image information providing site S1 so that the thus sent image information is sent to the portable telephone 10 or the like.

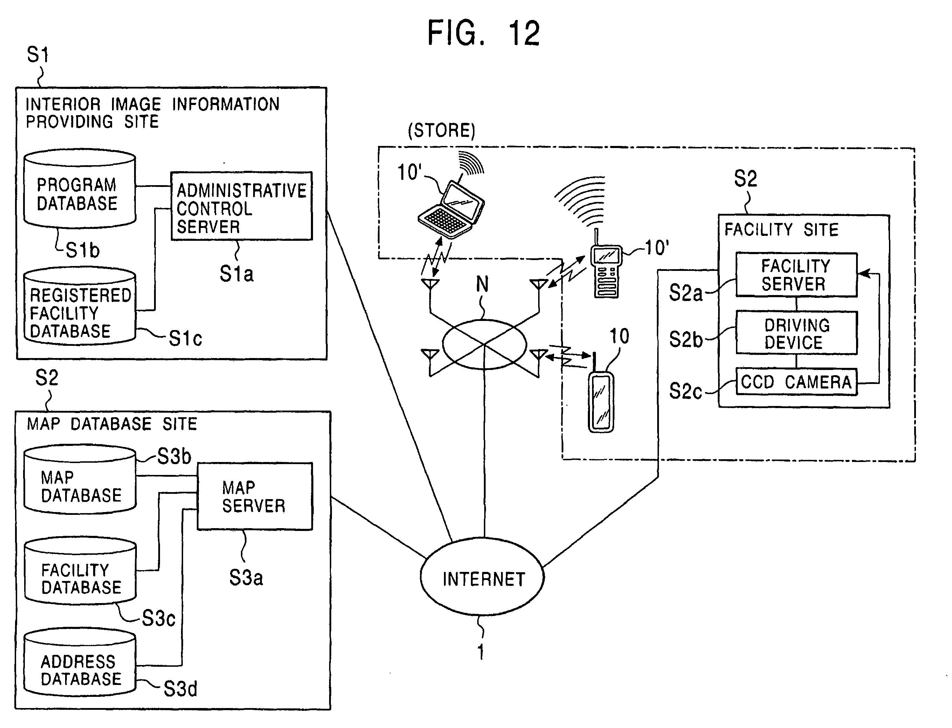

Fig. 12 is a system configuration view showing another embodiment of the interior image information providing system of to the present embodiment.

According to the interior image information providing system according to the present invention, data of each registered store recorded in the registered facility database S1c of the interior image information providing site S1 does not include position data and judgement as to whether the portable telephone 10 or the personal digital assistant 10' entered inside a registered store is made based on the map data which is provided by a map database site S3 connected to Internet I.

The map database site S3 comprises a map server S3a for providing map information, a map database S3b in which map image data is accumulated, a facility database S3c in which coordinate data indicating names and positions of facilities on the map is accumulated, and an address database S3d in which address data on the map is stored, whereby various services related to the map information are provided for other various sites connected to the Internet I.

Then, of facilities recorded in the facility database S3c of the map database site S3, stores which has been registered in the interior image information providing system are provided with IDs, respectively.

In the interior image information providing system, when, from the portable telephone 10 or the personal digital assistant 10', position data indicating the position of said portable telephone 10 or the like detected through the GPS circuit 39 is inputted into the interior image information providing site S1, the administrative control server S1a sends the position data of the portable telephone 10 or the like to the map database site S3 via Internet I.

The map server S3a which has received the position data from the portable telephone 10 searches the facility database S3c, reads out data indicating the ID of a store having corresponding position data, and sends the thus read-out ID data to the interior image information providing site S1 via Internet I.

Then, the administrative control server S1a of the interior image information providing site S1 which has received the ID data from the map database site S3 searches the registered facility database S1c. If there is a store having a corresponding ID, that is, if a store where the portable telephone 10 or the personal digital assistant 10' entered has been registered in the interior image information providing system, the administrative control server S1a searches the program database S1b and reads out a processing program having a corresponding ID, in the same manner as in the aforementioned embodiment.

Then, the administrative control server S1a accesses the facility site S2 having the ID via Internet based on the thus read-out processing program and receives picked-up image information obtained from the CCD camera S2c of the facility site S2. The administrative control server S1a further sends the picked-up image information to the portable telephone 10 or the personal digital assistant 10', thus an image showing an inside condition of the store where the user visited is displayed on the display panel 12 of the portable telephone 10 or the like.

Furthermore, if no ID that corresponds to the store's ID which has been read out from the facility database S3c of the map database site S3 is recorded in the registered facility database site S1c of the interior image information providing site S1, the administrative control server S1a finds that the store where the portable telephone 10 or the personal digital assistant 10' has not registered in the interior image information providing system and sends a signal for displaying a message to this effect to the portable telephone 10 or the like for displaying on the display panel 12 of the portable telephone 10 and the like.

In the interior image information providing system according to the present embodiment, judgement as to whether the store where the portable telephone 10 or the personal digital assistant 10' entered has been registered in said system or not is carried out by using services of the map database site S3 which performs various services related to the map and, in general, such a map database site S3 always renews its updated map information, therefore, even if a registered store has moved, it is not necessary to rewrite the data of the registered facility database S1c of the interior image information providing site S1 and maintenance of the map data base site S3 makes it possible to perform the service for providing the portable telephone 10 or the like with the interior image information.

In the above embodiments, it is detected that the portable telephone 10 or the personal digital assistant 10' carried by the user is located inside a facility such as a store and an image showing an inside condition of the facility is then displayed on the display panel of the portable telephone 10 or the personal digital assistant 10'. However, in the following embodiment, interior image information on facilities located in the vicinity of the place where the user carrying the portable telephone 10 or the personal digital assistant 10' with him/her stands is displayed on the display panel of the portable telephone 10 or the personal digital assistant 10'.

That is, referring to Fig. 12, when position data indicating the position of the portable telephone 10 which has been detected through the GPS circuit 39 is inputted into the interior information providing site S1 from the portable telephone 10 (refer to Fig. 1), the administrative control server S1a sends the position data of the portable telephone 10 or the like to the map database site S3 via Internet I.

The map server S3a which has received the position data from the portable telephone 10 searches the map database S3b and the facility database S3c based on the position data, whereby map data of the vicinity including the place where the user carrying the portable telephone 10 with him/her stands is read out from the map database S3b and furthermore, various facilities such as stores included in the range of a map image shown by the thus read-out map data are read out from the facility database S3c.

Then, the map data and facility data which have been read out from the databases are sent to the portable telephone 10 via Internet, thus a map image is displayed on the display panel 12 (refer to Fig. 1) of the portable telephone and, at the same time, facilities are displayed at the respective locations on the map image.

Furthermore, hyperlinks are embedded in landmarks indicating the respective facilities and the landmarks are linked to the interior image information providing site S1.

When the user specifies a desirable landmark indicating a facility such as a store where the user wishes to visit, the specified information is sent to the administrative control server S1a of the interior image information providing site S1 via Internet I and the administrative control server S1a searches the registered facility database S1c based on the specified information. If the ID of the specified facility has been registered in the registered facility database S1c, the administrative control server S1 further searches the program database S1b and reads out a processing program having a corresponding ID in the same manner as in the aforementioned embodiment.

Then, the administrative control server S1a accesses the facility site S2 having the ID based on the thus read-out processing program via Internet I and receives the picked-up image information obtained from the CCD camera S2c of the facility site S2. The administrative control server S1a further sends the picked-up image information to the portable telephone 10, thus an image showing the inside condition of the facility specified by the user is displayed on the display panel 12 of the portable telephone 10.

Furthermore, if the ID of the facility specified on the map image displayed on the portable telephone 10 has not registered in the registered facility database site S1c of the interior image information providing site S1, the administrative control server S1a sends a signal for displaying a message to this effect to the portable telephone 10 for displaying on the display panel 12 thereof.

Thus, the user can make the portable telephone 10 display the inside condition of a facility such as a store or the like where he/she wishes to visit of facilities in the vicinity of the place where he/she stands at that moment for checking beforehand.

As described above, the user carrying the portable telephone 10 with him/her can obtain live information showing the inside condition of a facility where he/she wishes to visit, whereby he/she can easily select a facility which suits his/her own purpose. In addition, if a facility such as a store arranges commodities and exhibits that the facility wants to appeal to the visitors at positions easily viewed from the CCD camera S2C, images thereof can become very effective advertising media.

Then, according to such an interior image information providing system, it becomes possible to grasp the actual situation through provision of live information and such facility information can be obtained anywhere anytime by means of the portable information terminal such as a portable telephone, therefore, advertising media which are more excellent than the advertising by means the press media and commercials in the broadcasting media can be provided.

Also, for example, by establishing a system, wherein when a user saves image data provided by the interior image information providing site S1 and takes the data to the facility, he/she can receive a special service, an ability of the facility to attract customers can be enhanced and users' advantages also further increase.

In the above, the embodiment has been described, wherein the user specifies a facility, on which he/she wishes to receive interior image information, by means of a landmark displayed on the map display. However, a construction may be employed, wherein by displaying a list showing facilities located in the vicinity of the place where the user carrying the portable telephone 10 with him/her stands on the display panel 12 of the portable telephone solely or together with a map image and then specifying a facility name with a hyperlink embedded displayed on the list, image information on the inside of an arbitrary facility can be provided.

In addition, when such a list is displayed, it is also possible that by specifying a category of facilities (such as restaurants, movie theaters, convenience stores, and discount shops beforehand so that a list including only the facilities that belong to the target category is displayed.

Furthermore, in Fig. 12, of the GPS circuit 39 of the portable telephone 10 is not used, it is also possible that the user accesses the interior image information providing site S1, specifies a desirable area name and facility's category, whereby interior image information of a desirable facility is provided. In this case, the map database site S3 reads out facilities which belong to the specified area and category through search the facility database S3c and the address database S3d and makes a list of the facilities to be displayed on the display panel 12 of the portable telephone 10.

Moreover, it is also possible that the user accesses the interior image information providing site S1 from the portable telephone 10 and then inputs a URL, so that a facility site S2 of the facility site S2 on which he/she wishes to receive interior image information can be specified.

## Claims

1. A portable information terminal (10) comprising
a display part (12, 31) for displaying an image;
an image signal receiving part (21, 22) for receiving an image signal to be sent via a mobile communication network (N);
an image signal reproducing part (30) which reproduces said image signal received by means of said image signal receiving part (21, 22) and makes said display part (12, 31) display said reproduced image; and
a position detecting signal outputting part (21, 22) which outputs, via the mobile communication network (N), a position detecting signal representing an own position of said portable information terminal (10),
**characterized in that**
said position detecting signal is supplied to an interior image information providing site (S1) in which said position detecting signal is used to identify an image-pickup device (S2c) located in an area including said own position of said portable information terminal (10), and said image signal receiving part (21, 22) receives images from the image-pickup device (S2c) identified by the interior image information providing site (S1).

2. A portable information terminal (10) as set forth in Claim 1, wherein
said position detecting signal outputting part (21, 22) is a global positioning system.

3. A portable information terminal (10) as set forth in Claim 1, wherein
said portable information terminal is a portable telephone (10).

4. An interior image information providing system by means of a portable information terminal (10) comprising:
a portable information terminal (10);
an interior image information providing site (S1) which is connected to said portable information terminal (10) via a mobile communication network (N) and also connected to a computer network (I); and
a facility site (S2) which is provided with an image-pickup device (S2c) installed in a facility and sends an image signal obtained by said image-pickup device (S2c) to the computer network (I),
wherein
said portable information terminal (10) is provided with a display part (12, 31) for displaying an image; an image signal receiving part (21, 22) for receiving an image signal to be sent via the mobile communication network (N) connected to the computer network (I); an image signal reproducing part (30) which reproduces said image signal received by means of said image signal receiving part (21, 22) and makes said display part (12, 31) display said reproduced image; and a signal outputting part (21, 22) which outputs, via the mobile communication network (N), a position detecting signal identifying the position of the portable information terminal or a facility specifying signal indicating from which facility said image signal is to be obtained to the computer network (I).

5. An interior image information providing system as claimed in claim 4, wherein
said signal outputting part (21, 22) outputs a position detecting signal for making a judgement on an image-pickup device (S2c) which sends an image signal to said image signal receiving part (21, 22) to the computer network (I) and
said interior image information providing site (S1) is provided with a judging part (S1a) for making a judgement on said facility site (S2) to receive an image signal based on a position detecting signal inputted from said signal outputting part (21, 22) of said portable information terminal (10) and a sending part (S1a) for sending said image signal inputted, via the computer network (I), from said image-pickup device (S2c) of said facility site (S2), which has been judged to receive said image signal, to said portable information terminal (10) via the mobile communication network (N).

6. An interior image information providing system as set forth in Claim 4, wherein
said position detecting signal (21, 22) is derived from a global positioning system.

7. An interior image information providing system as set forth in Claim 4, wherein
said portable information terminal (10) is a portable telephone (10).

8. An interior image information providing system as set forth in Claim 4, wherein
said interior image information providing site (S1) comprises a program database (S1b) in which programs for driving and controlling said image-pickup device (S2c) of each facility site (S2) are stored.

9. An interior image information providing system as set forth in Claim 8, wherein
distinguishing data for distinguishing a portable information terminal (10) is added to said program of each facility site (S2) which has been stored in said program database (S1b) and said distinguishing data is sent to said facility site (S2) that has been judged by means of said judging part (S1a).

10. An interior image information providing system as set forth in Claim 4, wherein
said interior image information providing site (S1) is provided with a registered facility database in which information on facilities where said facility sites (S2) have been installed is recorded and which provides said judging part with data for making a judgement on said facility site (S2).

11. An interior image information providing system as set forth in Claim 10, wherein
position data indicating positions of registered facilities is recorded in said registered facility database.

12. An interior image information providing system as set forth in Claim 4, wherein
said judging part of said interior image information providing site (S1) makes said judgement by confirming whether a facility exists or not based on position information indicating said positions of said registered facilities which has been accumulated in a map database site connected to a computer network (I).

13. An interior image information providing system as set forth in Claim 4, wherein
when said position detecting signal inputted from said signal outputting part (21, 22) of said portable information terminal (10) indicates a position inside of a facility, said judging part (S1a) judges a facility site (S2) installed in said facility to be a facility site (S2) where an image signal is to be received.

14. An interior image information providing system as claimed in claim 4, wherein said signal outputting part (21, 22) outputs. via the mobile communication network (N), a position detecting signal thereof to said computer network (I) and
said interior image information providing site (S1) is provided with a facility detecting part (S1a) which detects, based on said position detecting signal inputted from said signal outputting part (21, 22) of said portable information terminal (10), facilities located in the vicinity of said position indicated by said position detecting signal and sends a display signal which displays detected facilities to said portable information terminal (10), and a sending part for sending an image signal inputted, via the computer network (I), from said image-pickup device (S2c) of said facility site (S2) installed in one of said facilities displayed by means of said display signal in said portable information terminal (10) to said portable information terminal (10) via the mobile communication network (N).

15. An interior image information providing system as set forth in Claim 14, wherein
said facility detecting part is a map database site which is provided with a map database and a facility database and provides map information and facility information included in said map information.

16. An interior image information providing system as set forth in Claim 14, wherein
based on a position detecting signal inputted from said portable information terminal (10), said facility detecting part detects facilities which are located in the vicinity of said position indicated by said position detecting signal and also included in a category specified in said portable information terminal (10).

17. An interior image information providing system as set forth in Claim 14, wherein
said portable information terminal (10) comprises a facility specifying means (21, 22, 30) for specifying a facility which receives an image signal of a plurality of facilities that have been detected by said facility detecting part of said interior image information providing site (S1).

18. An interior image information providing system as claimed in claim 4, wherein
said portable information terminal (10) is further provided with a facility specifying part (21, 22, 30) for outputting a facility specifying signal to the computer network (I) via the mobile communication network (N) and
said interior image information providing site (S1) is provided with a sending part (S1a) for sending an image signal, which is inputted via the computer network (I) from an image-pickup device (S2c) of said facility site (S2) installed in a facility specified by said facility specifying signal specifying a facility inputted from said facility specifying part (21, 22, 30) of said portable information terminal (10), to said portable information terminal (10) via the mobile communication network (N).

19. An interior image information providing system as set forth in Claim 18, wherein
said facility specifying part (21, 22, 30) of said portable information terminal (10) specifies a facility based on a uniform resource locator (URL) of said facility site (S2).

20. An interior image information providing system as set forth in Claim 18, wherein
said interior image information providing site (S1) is provided with a facility searching part for searching for a facility based on addresses, wherein said facility searching part searches for a facility where said facility site (S2) has been installed based on a facility specifying signal indicating an address of a facility to be sent from said facility specifying part of said portable information terminal (10).

21. An interior image information providing system as set forth in Claim 18, wherein
said facility detecting part is a map database site which is provided with a map database, a facility database, and an address database and provides map information and facility information included in said map information.

## Patentansprüche

1. Tragbares Informationsterminal (10), umfassend:
einen Anzeigeteil (12, 31) zum Anzeigen eines Bildes;
einen Bildsignal-Empfangsteil (21, 22) zum Empfangen eines Bildsignals, das über ein Mobilkommunikationsnetzwerk (N) auszusenden ist;
einen Bildsignal-Wiedergabeteil (30), der das Bildsignal wiedergibt, das mittels des Bildsignal-Empfangsteils (21, 22) empfangen wird, und die Anzeigeeinheit (12, 31) veranlasst, das wiedergegebene Bild anzuzeigen; und
einen Positionsdetektionssignal-Ausgabeteil (21, 22), der über das Mobilkommunikationsnetzwerk (N) ein Positionsdetektionssignal ausgibt, das eine eigene Position des tragbaren Informationsterminals (10) darstellt,
**dadurch gekennzeichnet,**
**dass** das Positionsdetektionssignal einer Innenraumbildinformations-Bereitstellungsstelle (S1) zugeführt wird, in der das Positionsdetektionssignal dazu verwendet wird, eine Bildaufnahmeeinrichtung (S2c) zu identifizieren, die sich in einem Bereich befindet, der die eigene Position des tragbaren Informationsterminals (10) umfasst, und dass der Bildsignal-Empfangsteil (21, 22) Bilder von der Bildaufnahmeeinrichtung (S2c) empfängt, die durch die Innenraumbildinformations-Bereitstellungsstelle (S 1) identifiziert wird.

2. Tragbares Informationsterminal (10) nach Anspruch 1, wobei der Positionsdetektionssignal-Ausgabeteil (21, 22) ein globales Positionsbestimmungssystem (GPS) ist.

3. Tragbares Informationsterminal (10) nach Anspruch 1, wobei das tragbare Informationsterminal ein tragbares Telefon (10) ist.

4. Innenraumbildinformations-Bereitstellungssystem mittels eines tragbaren Informationsterminals (10), umfassend:
ein tragbares Informationsterminal (10);
eine Innenraumbildinformations-Bereitstellungsstelle (S1), die mit dem tragbaren Informationsterminal (10) über ein Mobilkommunikationsnetzwerk (N) verbunden ist und auch mit einem Computernetzwerkwerk (I) verbunden ist; und
eine Einrichtungsstelle (S2), die mit einer Bildaufnahmeeinrichtung (S2c) versehen ist, die in einer Einrichtung eingebaut ist und ein Bildsignal, das von der Bildaufnahmeeinrichtung (S2c) erhalten wird, an das Computernetzwerk (I) sendet, wobei
das tragbare Informationsterminal (10) mit einem Anzeigeteil (12, 31) zum Anzeigen eines Bildes; einem Bildsignal-Empfangsteil (21, 22) zum Empfangen eines Bildsignals, das über das Mobilkommunikationsnetzwerk (N) zu senden ist, das mit dem Computernetzwerk (I) verbunden ist, einem Bildsignal-Wiedergabeteil (30), der das Bildsignal wiedergibt, das von dem Bildsignal-Empfangsteil (21, 22) empfangen worden ist, und die Anzeigeeinheit (12, 31) veranlasst, das wiedergegebene Bild anzuzeigen; und einem Signalausgabeteil (21, 22) versehen ist, der über das Mobilkommunikationsnetzwerk (N) ein Positionsdetektionssignal, das die Position des tragbaren Informationsterminals identifiziert, oder ein Einrichtungsspezifikationssignal, das angibt, von welcher Einrichtung das Bildsignal zu erhalten ist, an das Computernetzwerk (I) ausgibt.

5. Innenraumbildinformations-Bereitstellungssystem nach Anspruch 4, wobei der Signalausgabeteil (21, 22) ein Positionsdetektionssignal, um eine Beurteilung über eine Bildaufnahmeeinrichtung (S2c), die ein Bildsignal an den Bildsignal-Empfangsteil (21, 22) sendet, vorzunehmen, an das Computernetzwerk (I) ausgibt, und wobei die Innenraumbildinformations-Bereitstellungsstelle (S1) mit einem Beurteilungsteil (S1a), um eine Beurteilung über die Einrichtungsstelle (S2) vorzunehmen, versehen ist, um ein Bildsignal auf der Grundlage eines Positionsdetektionssignals zu empfangen, das von dem Signalausgabeteil (21, 22) des tragbaren Informationsterminals (10) eingegeben wird, und mit einem Sendeteil (S1a) versehen ist, um das Bildsignal, das über das Computernetzwerk (I) von der Bildaufnahmeeinrichtung (S2c) der Einrichtungsstelle (S2) eingegeben wird, über die eine Beurteilung vorgenommen worden ist, das Bildsignal zu empfangen, an das tragbare Informationsterminal (10) über das Mobilkommunikationsnetzwerk (N) zu senden.

6. Innenraumbildinformations-Bereitstellungssystem nach Anspruch 4, wobei das Positionsdetektionssignal (21, 22) von einem globalen Positionsbestimmungssystem (GPS) abgeleitet wird.

7. Innenraumbildinformations-Bereitstellungssystem nach Anspruch 4, wobei das tragbare Informationsterminal (10) ein tragbares Telefon (10) ist.

8. Innenraumbildinformations-Bereitstellungssystem nach Anspruch 4, wobei die Innenraumbildinformations-Bereitstellungsstelle (S1) eine Programmdatenbank (S1b) umfasst, in der Programme zum Antreiben und Steuern der Bildaufnahmeeinrichtung (S2c) jeder Einrichtungsstelle (S2) gespeichert sind.

9. Innenraumbildinformations-Bereitstellungssystem nach Anspruch 8, wobei Unterscheidungsdaten zum Unterscheiden eines tragbaren Informationsterminals (10) dem Programm jeder Einrichtungsstelle (S2), das in der Programmdatenbank (S1b) gespeichert worden ist, hinzugefügt sind, und die Unterscheidungsdaten an die Einrichtungsstelle (S2), über die mittels des Beurteilungsteils (S1a) eine Beurteilung vorgenommen wurde, gesendet werden.

10. Innenraumbildinformations-Bereitstellungssystem nach Anspruch 4, wobei die Innenraumbildinformations-Bereitstellungsstelle (S1) mit einer Datenbank für registrierte Einrichtungen versehen ist, in der Informationen über Einrichtungen, in denen die Einrichtungsstellen (S2) eingebaut sind, aufgezeichnet sind, und die den Beurteilungsteil (S1a) mit Daten beliefert, um eine Beurteilung über die Einrichtungsstelle (S2) vorzunehmen.

11. Innenraumbildinformations-Bereitstellungssystem nach Anspruch 10, wobei Positionsdaten, die Positionen von registrierten Einrichtungen angeben, in der Datenbank für registrierte Einrichtungen aufgezeichnet sind.

12. Innenraumbildinformations-Bereitstellungssystem nach Anspruch 4, wobei der Beurteilungsteil der Innenraumbildinformations-Bereitstellungsstelle (S1) die Beurteilung vornimmt, indem anhand von Positionsinformationen, die die Positionen der registrierten Einrichtungen angeben, die in einer Plandatenbankstelle, die mit einem Computernetzwerk (I) verbunden ist, gesammelt worden sind, bestätigt wird, ob eine Einrichtung vorhanden ist oder nicht.

13. Innenraumbildinformations-Bereitstellungssystem nach Anspruch 4, wobei, wenn das Positionsdetektionssignal, das von dem Signalausgabeteil (21, 22) des tragbaren Informationsterminals (10) eingegeben wird, eine Position innerhalb einer Einrichtung angibt, der Beurteilungsteil (S1a) eine Beurteilung vornimmt, dass eine Einrichtungsstelle (S2), die in der Einrichtung eingebaut ist, eine Einrichtungsstelle (S2) ist, an der ein Bildsignal zu empfangen ist.

14. Innenraumbildinformations-Bereitstellungssystem nach Anspruch 4, wobei
der Signalausgabeteil (21, 22) über das Mobilkommunikationsnetzwerk (N) ein Positionsdetektionssignal davon an das Computernetzwerk (I) ausgibt, und
die Innenraumbildinformations-Bereitstellungsstelle (S 1) mit einem Einrichtungsdetektionsteil (S1a) versehen ist, der auf der Grundlage des Positionsdetektionssignals, das von dem Signalausgabeteil (21, 22) des tragbaren Informationsterminals (10) eingegeben wird, Einrichtungen detektiert, die sich in der Nähe der Position befinden, die von dem Positionsdetektionssignal angezeigt wird, und ein Anzeigesignal, das detektierte Einrichtungen anzeigt, an das tragbare Informationsterminal (10) sendet, und mit einem Sendeteil versehen ist, um ein Bildsignal, das über das Computernetzwerk (I) von der Bildaufnahmeeinrichtung (S2c) der Einrichtungsstelle (S2), die in einer der Einrichtungen eingebaut ist, welche mittels des Anzeigesignals in dem tragbaren Informationsterminal (10) angezeigt wird, eingegeben wird, an das tragbare Informationsterminal (10) über das Mobilkommunikationsnetzwerk (N) zu senden.

15. Innenraumbildinformations-Bereitstellungssystem nach Anspruch 14, wobei der Einrichtungsdetektionsteil eine Plandatenbankstelle ist, die mit einer Plandatenbank und einer Einrichtungsdatenbank versehen ist und Planinformationen und Einrichtungsinformationen, die in der Planinformation enthalten sind, bereitstellt.

16. Innenraumbildinformations-Bereitstellungssystem nach Anspruch 14, wobei auf der Grundlage eines Positionsdetektionssignals, das von dem tragbaren Informationsterminal (10) eingegeben wird, der Einrichtungsdetektionsteil Einrichtungen detektiert, die sich in der Nähe der Position befinden, die durch das Positionsdetektionssignal angegeben wird, und auch in einer Kategorie enthalten sind, die in dem tragbaren Informationsterminal (10) spezifiziert ist.

17. Innenraumbildinformations-Bereitstellungssystem nach Anspruch 14, wobei das tragbare Informationsterminal (10) ein Einrichtungsspezifikationsmittel (21, 22, 30) umfasst, um eine Einrichtung, die ein Bildsignal empfängt, aus einer Vielzahl von Einrichtungen zu spezifizieren, die von dem Einrichtungsdetektionsteil der Innenraumbildinformations-Bereitstellungsstelle (S 1) detektiert worden sind.

18. Innenraumbildinformations-Bereitstellungssystem nach Anspruch 4, wobei
das tragbare Informationsterminal (10) ferner mit einem Einrichtungsspezifikationsteil (21, 22, 30) versehen ist, um ein Einrichtungsspezifikationssignal an das Computernetzwerk (I) über das Mobilkommunikationsnetzwerk (N) auszugeben, und
die Innenraumbildinformations-Bereitstellungsstelle (S1) mit einem Sendeteil (S1a) versehen ist, um ein Bildsignal, das über das Computernetzwerk (I) von einer Bildaufnahmeeinrichtung (S2c) der Einrichtungsstelle (S2) eingegeben wird, die in einer Einrichtung eingebaut ist, die von dem Einrichtungsspezifikationssignal spezifiziert wird, das eine Einrichtung spezifiziert und von dem Einrichtungsspezifikationsteil (21, 22, 30) des tragbaren Informationsterminals (10) spezifiziert wird, an das tragbare Informationsterminal (10) über das Mobilkommunikationsnetzwerk (N) zu senden.

19. Innenraumbildinformations-Bereitstellungssystem nach Anspruch 18, wobei der Einrichtungsspezifikationsteil (21, 22, 30) des tragbaren Informationsterminals (10) eine Einrichtung auf der Grundlage eines Uniform Resource Locators (URL) der Einrichtungsstelle (S2) spezifiziert.

20. Innenraumbildinformations-Bereitstellungssystem nach Anspruch 18, wobei die Innenraumbildinformations-Bereitstellungsstelle (S1) mit einem Einrichtungssuchteil zum Suchen nach einer Einrichtung auf der Grundlage von Adressen versehen ist, wobei der Einrichtungssuchteil nach einer Einrichtung, in der die Einrichtungsstelle (S2) eingebaut worden ist, auf der Grundlage eines Einrichtungsspezifikationssignals sucht, das eine Adresse einer Einrichtung angibt, die von dem Einrichtungsspezifikationsteil des tragbaren Informationsterminals (10) zu senden ist.

21. Innenraumbildinformations-Bereitstellungssystem nach Anspruch 18, wobei der Einrichtungsdetektionsteil eine Plandatenbankstelle ist, die mit einer Plandatenbank, einer Einrichtungsdatenbank und einer Adressdatenbank versehen ist und Planinformationen und Einrichtungsinformationen, die in den Planinformationen enthalten sind, bereitstellt.

## Revendications

1. Terminal d'informations portable (10), comprenant :
une partie d'affichage (12, 31) pour afficher une image ;
une partie de réception de signal d'image (21, 22) pour recevoir un signal d'image à envoyer via un réseau de communication mobile (N);
une partie de reproduction de signal d'image (30) qui reproduit ledit signal d'image reçu au moyen de ladite partie de réception de signal d'image (21, 22) et qui amène ladite partie d'affichage (12, 31) à afficher ladite image reproduite ; et
une partie de délivrance de signal de détection de position (21, 22) qui délivre, via le réseau de communication mobile (N), un signal de détection de position représentant une propre position dudit terminal d'informations portable (10),
**caractérisé en ce que**
ledit signal de détection de position est fourni à un site intérieur de fourniture d'informations d'images (S1) dans lequel ledit signal de détection de position est utilisé pour identifier un dispositif de prise d'images (S2c) situé dans une zone qui inclut ladite propre position dudit terminal d'informations portable (10), et ladite partie de réception de signal d'image (21, 22) reçoit des images depuis ledit dispositif de prise d'images (S2c) identifié par le site intérieur de fourniture d'informations d'images (S1).

2. Terminal d'informations portable (10) selon la revendication 1, dans lequel
ladite partie de délivrance de signal de détection de position (21, 22) est un système de positionnement global.

3. Terminal d'informations portable (10) selon la revendication 1, dans lequel
ledit terminal d'informations portable est un téléphone portable (10).

4. Système intérieur de fourniture d'informations d'image, au moyen d'un terminal d'informations portable (10), comprenant :
un terminal d'informations portable (10) ;
un site intérieur de fourniture d'informations d'images (S1) qui est connecté audit terminal d'informations portable (10) via un réseau de communication mobile (N), et qui est également connecté à un réseau d'ordinateurs (I) ; et
un site technique (52) qui est pourvu d'un dispositif de prise d'images (S2c) installé dans une installation, et qui envoie un signal d'images obtenu par ledit dispositif de prise d'images (S2c) au réseau d'ordinateurs (I),
dans lequel ledit terminal d'informations portable (10) est pourvu d'une partie d'affichage (12, 31) pour afficher une image ; une partie de réception de signal d'image (21, 22) pour recevoir un signal d'image à envoyer via le réseau de communication mobile (N) connecté au réseau d'ordinateurs (I) ; une partie de reproduction de signal d'image (30) qui reproduit ledit signal d'image reçu au moyen de ladite partie de réception de signal d'image (21, 22) et qui amène ladite partie d'affichage (12, 31) à afficher ladite image reproduite ; et une partie de délivrance de signal (21, 22) qui délivre, via le réseau de communication mobile (N), un signal de détection de position qui identifie la position du terminal d'informations portable ou un signal de spécification d'installation indiquant de quelle installation ledit signal d'image doit être obtenu, vers le réseau d'ordinateurs (I).

5. Système intérieur de fourniture d'informations d'image selon la revendication 4, dans lequel ladite partie de délivrance de signal (21, 22) délivre un signal de détection de position pour procéder à un jugement quant à un dispositif de prise d'images (S2c) qui envoie un signal d'image à ladite partie de réception de signal d'images (21, 22) au réseau d'ordinateurs (I), et
ledit site intérieur de fourniture d'informations d'images (S1) est pourvu d'une partie de jugement (S1a) pour procéder à un jugement quant audit site technique (S2) pour recevoir un signal d'image basé sur un signal de détection de position entré depuis ladite partie de délivrance de signal (21, 22) dudit terminal d'informations portable (10), et d'une partie d'émission (S1a) pour émettre ledit signal d'image entré, via le réseau d'ordinateurs (I), depuis ledit dispositif de prise d'images (S2c) dudit site technique (S2), qui a été jugé pour recevoir ledit signal d'image, vers ledit terminal d'informations portable (10) via le réseau de communication mobile (N).

6. Système intérieur de fourniture d'informations d'image selon la revendication 4, dans lequel
ledit signal de détection de position (21, 22) est dérivé d'un système de positionnement global.

7. Système intérieur de fourniture d'informations d'image selon la revendication 4, dans lequel
ledit terminal d'informations portable (10) est un téléphone portable (10).

8. Système intérieur de fourniture d'informations d'image selon la revendication 4, dans lequel
ledit site intérieur de fourniture d'informations d'images (S1) comprend une base de données de programme (S1b) dans laquelle sont mémorisés des programmes pour piloter et pour commander ledit dispositif de prise d'images (S2c) de chaque site technique (S2).

9. Système intérieur de fourniture d'informations d'image selon la revendication 8, dans lequel
des données de distinction pour distinguer un terminal d'informations portable (10) sont ajoutées audit programme de chaque site technique (S2) qui a été mémorisé dans ladite base de données de programme (S1b), et lesdites données de distinction sont envoyées audit site technique (S2) qui a été jugé au moyen de ladite partie de jugement (S1a).

10. Système intérieur de fourniture d'informations d'image selon la revendication 4, dans lequel
ledit site intérieur de fourniture d'informations d'images (S1) est doté d'une base de données d'installations en registre dans laquelle des informations concernant des installations dans lesquelles lesdits sites techniques (S2) ont été installés sont enregistrées, et qui fournit à ladite partie de jugement (S1a) des données pour procéder à un jugement quant audit site technique (S2).

11. Système intérieur de fourniture d'informations d'image selon la revendication 10, dans lequel
des positions indiquant des données de position des installations en registre sont enregistrées dans ladite base de données d'installations en registre.

12. Système intérieur de fourniture d'informations d'image selon la revendication 4, dans lequel
ladite partie de jugement dudit site intérieur de fourniture d'informations d'images (S1) procède audit jugement en confirmant si une installation existe ou non en se basant sur des informations de position indiquant lesdites positions desdites installations en registre, qui ont été accumulées dans un site incluant une base de données de cartographie connectée à un réseau d'ordinateurs (I).

13. Système intérieur de fourniture d'informations d'image selon la revendication 4, dans lequel
quand ledit signal de détection de position entré depuis ladite partie de délivrance de signal (21, 22) dudit terminal d'informations portable (10) indique une position à l'intérieur d'une installation, ladite partie de jugement (S1a) juge qu'un site technique (S2) installé dans ladite installation est un site technique (S2) auquel un signal d'image doit être reçu.

14. Système intérieur de fourniture d'informations d'image selon la revendication 4, dans lequel
ladite partie de délivrance de signal (21, 22) délivre, via le réseau de communication mobile (N), un signal de détection de position de celui-ci audit réseau d'ordinateurs (I), et
ledit site intérieur de fourniture d'informations d'images (S1) est pourvu d'une partie de détection d'installation (S1a) qui détecte, en se basant sur ledit signal de détection de position entré depuis ladite partie de délivrance de signal (21, 22) dudit terminal d'informations portable (10), des installations situées au voisinage de ladite position indiquée par ledit signal de détection de position, et qui envoie un signal d'affichage qui affiche des installations détectées vers ledit terminal d'informations portable (10), et une partie d'émission pour émettre un signal d'image entré, via le réseau d'ordinateurs (I), depuis le dispositif de prise d'images (S2c) dudit site technique (S2) installé dans l'une desdites installations affichées au moyen dudit signal d'affichage dans ledit terminal d'informations portable (10) vers ledit terminal d'informations portable (10) via le réseau de communication mobile (N).

15. Système intérieur de fourniture d'informations d'image selon la revendication 14, dans lequel
ladite partie de détection d'installations est un site incluant une base de données de cartographie, qui est pourvu d'une base de données de cartographie et d'une base de données d'installations, et qui fournit des informations de cartographie et des informations d'installations inclues dans lesdites informations de cartographie.

16. Système intérieur de fourniture d'informations d'image selon la revendication 14, dans lequel
en se basant sur un signal de détection de position entré depuis ledit terminal d'informations portable (10), ladite partie de détection d'installations détecte des installations qui sont situées au voisinage de ladite position indiquée par ledit signal de détection de position et également inclues dans une catégorie spécifiée dans ledit terminal d'informations portable (10).

17. Système intérieur de fourniture d'informations d'image selon la revendication 14, dans lequel
ledit terminal d'informations portable (10) comprend des moyens de spécification d'installation (21, 22, 30) pour spécifier une installation qui reçoit un signal d'image d'une pluralité d'installations qui ont été détectées par ladite partie de détection d'installation dudit site intérieur de fourniture d'informations d'images (S1).

18. Système intérieur de fourniture d'informations d'image selon la revendication 4, dans lequel
ledit terminal d'informations portable (10) est en outre pourvu d'une partie de spécification d'installation (21, 22, 30) pour délivrer un signal de spécification d'installation au réseau d'ordinateurs (I) via le réseau de communication mobile (N), et
ledit site intérieur de fourniture d'informations d'image (S1) est pourvu d'une partie d'émission (S1a) pour émettre un signal d'image, qui est entré via le réseau d'ordinateurs (I) depuis un dispositif de prise d'images (S2c) dudit site technique (S 2) installé dans une installation spécifiée par ledit signal de spécification d'installation qui spécifie une installation, entré depuis ladite partie de spécification d'installation (21, 22, 30) dudit terminal d'informations portable (10), vers ledit terminal d'informations portable (10), via le réseau de communication mobile (N).

19. Système intérieur de fourniture d'informations d'image selon la revendication 18, dans lequel
ladite partie de spécification d'installation (21, 22, 30) dudit terminal d'informations portable (10) spécifie une installation basée sur un localisateur de ressources uniforme (URL) dudit site technique (S2).

20. Système intérieur de fourniture d'informations d'image selon la revendication 18, dans lequel
ledit site intérieur de fourniture d'informations d'images (S1) est pourvu d'une partie de recherche d'installation pour rechercher une installation en se basant sur des adresses, dans lequel ladite partie de recherche d'installation cherche une installation dans laquelle ledit site technique (S2) a été installé en se basant sur un signal de spécification d'installation indiquant une adresse d'une installation à envoyer depuis ladite partie de spécification d'installation dudit terminal d'informations portable (10).

21. Système intérieur de fourniture d'informations d'image selon la revendication 18, dans lequel
ladite partie de détection d'installation est un site incluant une base de données de cartographie, qui est pourvu d'une base de données de cartographie, d'une base de données d'installation, et d'une base de données d'adresses, et qui fournit des informations de cartographie et des informations d'installation inclues dans lesdites informations de cartographie.
